# EUROPEAN PATENT SPECIFICATION

(11) **EP 2 502 390 B1**
(45) Date of publication and mention of the grant of the patent: **07.09.2016**
(21) Application number: 10821420.6
(22) Date of filing: 15.11.2010
(51) Int. Cl.: H04L 12/58, H04N 7/173

(54) **METHOD FOR DELIVERING A POSTAL ARTICLE**
VERFAHREN ZUR LIEFERUNG EINER POSTSENDUNG
PROCÉDÉ DE LIVRAISON D'UN ARTICLE POSTAL

(30) Priority: 21.11.2009 IT PI20090149
(43) Date of publication of application: 26.09.2012
(73) Proprietor: TV Post S.r.l., 57122 Livorno (IT)
(72) Inventor: CODIGLIONE, Pietro, 56017 San. Giuliano Terme (PI) (IT)
(74) Representative: Celestino, Marco
(86) International application number: PCT/IB2010/002912
(87) International publication number: WO 2011/064635

(56) References cited:
- WO-A1-02/03693
- WO-A1-98/17064
- JP-A- 2002 344 522
- US-A1- 2003 074 411
- US-B1- 7 571 457

## Description

### Field of the invention

The present invention relates to the field of communications and, in particular, it relates to a method for delivering postal articles to an addressee/user through a broadcasting transmission.

The invention relates, furthermore, to an apparatus that carries out this method.

### Description of the prior art

As well known, different methods and apparatus exist for enabling the step of receiving and sending electronic mail messages by means of computers, laptops, palmtops and mobile phones of last generation, or "smartphones", through an Internet connection made by an internet Service Provider, or ISP, and using a web protocol, or e-mail, such as http, IMAP/SMTP.

Methods exist, furthermore, for example as described in US2003/074411, which provide the Internet transmission of postal articles of physical type which are preliminarily converted into electronic format by means of a scanning step and then attached to an e-mail for the transmission to the addressee or delivered by means of WEB mailbox. They are techniques generically known as Reverse Hybrid Mail. However, the above described methods of the prior art require the need for the user to provide an Internet connection and of having an active electronic mailbox, as well as a suitable software for opening the e-mail and the relative attachments installed on the computer.

Methods and apparatus also exist that provide the use of a TV-set for displaying the electronic mail, or e-mail, received, or sent, via Internet. Even in this case, however, the transmission of the electronic mail is made through an internet Service Provider, or ISP, and the user must provide an own active electronic mailbox. The apparatus provides in this case the use of a TV-set connected to a Set-Top Box, or STB, having a return channel, used for connecting to the Internet Service Provider, or ISP, and then the ability to receive and send the e-mail and the attachments. As well known, the Set-Top Box is an electronic device used for adapting the analog technology of the TV-sets to the digital broadcasting. The most common functionality offered by a Set-Top Box is therefore the ability of receiving the digital television, and then the compatibility with at least one television standard.

In this case, however, the TV-set is used as the computer of the previously described case, i.e. as a local device in a point-to-point type connection, or "unicast". The only difference consists of an access to the Internet that is made through a point-to-point connection based on the return channel of the Set-Top Box.

In the prior art methods and apparatus are also known that carry out a service of monitoring the electronic mailbox, notifying possible status changes, in particular receiving an e-mail, directly on a TV-set connected to a Set-Top Box by sending messages via broadcasting. However, also in this case, the reading of the e-mail and the attachments can be carried out only through an Internet point-to-point connection and using a PC, or a TV-set, using the return channel of the Set-Top Box.

However, the methods that provide the use of the return channel of a Set-Top Box and of a connection of point-to-point type for enabling the receiving step and sending an e-mail, require, in addition to the availability by the user of an active electronic mailbox, also a full availability of the return channel in addition to an effective and quick broad band, in particular for transmitting e-mail containing heavy attachments. Furthermore, for using the return channel in the way above described it has to be available and connected to a telephone line, for example an ISDN or ADSL line, etc.

An example of a traditional method for sending an electronic postal article, i.e. an "e-mail", to the address of a user by means of a point-to-point transmission is disclosed in US2003/074411. The method provides collecting an electronic postal article, or e-mail, in a database and conversion into a predetermined digital format. The electronic postal article encoded in said digital format is, then, sent to the electronic address of the user. The user will then display the message of electronic mail having access to the Internet through a provider. Once entered the own userid and password, the user will then read the personal message.

In JP2002/344522 a system is described of sending and receiving electronic mail of mixed type. More in detail, the system provides a transmission of broadcasting type of generic data, by a television station. The broadcasting transmission used is of traditional type, i.e. of the one-to-many type, and is the same for all the users, as it happens with a television program of standard type. For displaying, instead, the personal electronic mail, a user must stipulate a contract with the television station and connect through the return channel, i.e. by means of telephone line, to a reserved area. Therefore, receiving the electronic mail is made through unicast transmission, as described in US2003/074411.

The solution described in JP2002/344522, as well as other similar solutions of mixed type, i.e. that use a broadcasting transmission for sending a same message to all the connected users and the unicast transmission through the return channel for personal and confidential messaging, requires in any case that the user has access through the return channel to a reserved area for displaying the personal electronic mail and then a certain familiarity with the electronic apparatus, the availability of a broadband point-to-point connection and the knowledge of the electronic mail procedures.

Finally, the above described technologies normally require, for the communication, the knowledge by the sender of the addressee electronic mail address (typically xxx@yyyy), which with respect to the common postal address can be unknown or missing, if the addressee is not familiar with the use of the electronic mail.

### Summary of the invention

It is then a feature of the present invention to provide a method for delivering a postal product to an addressee for displaying the postal product directly on a TV-set even without computer, or other electronic devices, such as palmtops, "smartphone" and the like.

It is also a feature of the present invention to provide a method for delivering a postal product to an addressee to avoid a mandatory and binding use of the return channel of a Set-Top Box, or STB.

It is another feature of the present invention to provide a method for delivering a postal product to an addressee that is easy to use and that does not need any familiarity with the data processing technology and with the typical processes of the electronic mail either.

It is another feature of the present invention to use exclusively the physical postal address of the addressee (or part of it) for delivering a postal product to an addressee on the addressee's own TV-set avoiding then the need for the sender to detect further specific address data for this kind of delivery, or other data, such as the address of electronic mail (xxxx@yyyy).

It is another feature of the present invention to develop techniques that make it possible to minimize the broadcast band availability for sending the postal products, using techniques for representing the documents that achieve very relevant levels of "lossless" compression (compression of data without losses), higher than those obtainable with known techniques exploiting the similarity and recursivity existing between the correspondence of a given sender for respective addressees.

These and other features are accomplished with one exemplary method, according to the invention, for delivering a postal product to a predetermined addressee, said method comprising the steps of:
- collecting in a database, arranged in a central operation unit, a plurality of original postal articles drafted by at least one sender, each postal article of said plurality associated with a postal article identification code;
- converting, by the central operation unit, said plurality of original postal articles into a plurality of data packets in a predetermined digital compressed format;
- broadcasting by said central operation unit said plurality of data packets in said digital compressed format, said broadcasting of said plurality of data packets occurring on at least one transmission frequency through a predetermined digital broadcasting platform;
- arranging at a plurality of addressees a plurality of Set-Top Boxes tuned with said transmission frequency, each Set-Top Box of said plurality of Set-Top Boxes used by a predetermined addressee of said plurality of addressees, on each Set-Top Box of said plurality of Set-Top Boxes running a predetermined application program, each Set-Top Box adapted to receive all the data packets of said plurality of data packets in said predetermined digital compressed format;
- logging-in said addressee on said application program of said Set Top Box, by entering the addressee access credentials;
- receiving said plurality of data packets in said digital compressed format by each Set-Top Box of said plurality of Set-Top Boxes;
- selectively computing, by each application program that runs on each Set-Top Box of said plurality of Set-Top Boxes, said plurality of data packets received by each Set-Top Box in said digital compressed format, said computing step comprising the steps of:
   - identifying a predetermined addressee, or a predetermined group of addressees, to which a predetermined postal article has to be delivered, said, or each, addressee being connected to a predetermined Set-Top Box of said plurality of Set-Top Boxes and being logged to the corresponding application program;
   - selectively determining, among said plurality of data packets, addressee data packets that are addressed to said predetermined addressee, or to said predetermined group of addressees, identified in said identification step, said step of determining carried out on the basis of the information entered by each user in said logging-in step and computed in said identification step;
   - analysing said, or each, determined data packet;
   - creating from said compressed data packets an image representative of said predetermined original postal article;
   - displaying said image of said predetermined postal article on a TV-set of said predetermined addressee, said TV-set operatively connected to said predetermined Set-Top Box.

Advantageously, the step of converting comprises generating a plurality of main data packets, based on said original postal articles, and a plurality of service data packets, said service data packets limiting the instructions for operation of said plurality of main data packets by said application program, such that said application program carries out said steps of identifying, determining, analysing, creating said main data packets.

In particular, the access credentials with which the addressee carries out the logging-in step comprise one, or more, data selected from the group comprised of: user name, PIN numerical code, password, postal address defined by city, street, street number, or a combination thereof.

In an exemplary embodiment, the step of converting said plurality of original postal articles by said central operation unit causes the production of a plurality of data packets in a digital compressed and encrypted format. In this case, during the logging-in step, the addressee provides to said application program by means of a remote control, or smart card, particular access credentials that are univocally associated with said addressee, said particular access credentials comprising at least one among the following data: user name, PIN numerical code, password, postal address comprising city, street, street number, to said application program, by means of a remote control, or smart card.

In particular, the computing step comprises a step of decrypting the data packets in said predetermined digital compressed and encrypted format, said decrypting step being carried out on the basis of said particular access credentials provided by the addressee to said application program in said logging-in step. The identification step is carried out, therefore, through the control of the access credentials provided by the addressee in the logging-in step by means of a remote control, or smart card, to obtaln particular authentication keys associated univocally to said addressee and/or to the group to which the addressee belongs.

In particular, said predetermined group of addressees can belong to a same geographic area identified on the basis of data relative to the domicile/residence address of said addressee, for example at least one city, or at least one city area, or at least one street that defines a geographic area to which the addressee belongs. In this case, the identification step carried out by the application program that runs on the Set Top Box, does not require the use of username and password, but will be carried out on the basis of the information relative to the geographic area to which the addressee belongs, in particular using the postal address of the different addressees belonging to said predetermined group, generating authentication keys associated with said group of addressees.

Advantageously, the step of broadcasting said plurality of compressed and preferably encrypted data packets is carried out using carousel techniques, i.e. a cyclical transmission of data, and/or streaming techniques.

In particular, the postal article identification code, which is associated univocally to a single postal article can be selected from the group comprised of:
- a barcode;
- an univocal digital code generated also on the basis of the information of the user-addressee, of the sender of the postal article, of the kind of postal article, of the object of the postal article, of the date of the postal article;
- a combination thereof.

Advantageously, said predetermined digital format is a vectorial meta-format, wherein the data packets contain a plurality of vectorial graphical constructs, each vectorial graphical construct of said plurality comprising at least one vectorial elementary component and a plurality of data/instructions for operation of the contained vectorial elementary components and of the packets same, i.e. for their definition and sequentialization, for operation of the safety of the accesses, of the safety of the data, and for a selective access, in order to reconstruct faithfully the original postal articles and assuring an access to single users/addressees to which said postal articles are actually addressed.

Advantageously, the vectorial meta-format is derived from the standard SVG "Scalable Vector Graphics", such that it is adapted to a serial interpretation of the controls in order to minimize the use of memory in phase of "parsing", i.e. a step of syntactic analysis through which a continuous stream is analysed as input, and to minimize completely the size of the data packets for optimization of the broadcasting band.

Alternatively to the vectorial representation in the vectorial meta-format, typically in case of postal articles relative to open circular mail, i.e. addressed to a group of users, that have typically mainly graphical or multimedial nature, for example leaflets, the digital compressed format can be a graphical format based on the JPEG, PNG or MPEG standards.

In particular, if the original postal article is converted into said vectorial meta-format, the step of converting comprises the following operations:
- generating vectorial "images" of said original postal articles, said generating step carried out using rules and syntax of said vectorial meta-format;
- creating at least one binary dictionary containing vectorial constructs that are recurring among the different vectorial images of the different postal articles, or recurring in a same vectorial image of a same postal article;
- creating a predetermined binary fingerprint associated with each page of each vectorial image of each postal article, each binary fingerprint comprising both possible specific vectorial constructs of a specific page, i.e. not present in other pages and then not included in the dictionaries, and all the pointing binary instructions within the fingerprint same or the binary dictionaries, to make it possible the reconstruction of the vectorial image of the page of the original postal article to which the binary fingerprint relates;
- creating binary indexes, i.e. indexing, of said plurality of binary fingerprints for determining key words, among which sender, object, addressee, page, obtaining a plurality of binary indexes;
- encrypting said binary fingerprints to ensure an exclusive and selective access to the selected addressee, or to the group of addressees, such that they can be only decrypted on the basis of the addressee access credentials, as entered by the addressee on the application program operating on the Set Top Box when logging-in for enabling the step of receiving the personal mail;
- encrypting the binary indexes to ensure an exclusive and selective access to the selected addressee, or to the group of addressees, such that they can be only decrypted on the basis of the access credentials as entered by the addressee on the application program operating on the Set Top Box when logging-in for enabling the step of receiving the personal mail;
- compressing the binary dictionaries;
- compressing the encrypted binary fingerprints;
- compressing the encrypted binary indexes;
- encrypting said compressed dictionaries on the basis of internal algorithms/keys not specific of the different addressees, since they have to be accessible by the operative software on the Set Top Box of different addressees for reconstruction of the different postal articles that use the dictionaries;
- creating a plurality of data packets, obtained by lexical segmentation, i.e. on the basis of the particular rules of the interactive digital broadcasting technique used for generating the carousels or the streams, or in any case for preparing to the digital broadcasting transmission and for enabling the receiving step by the Set Top Box available on the market.

Advantageously, the compression of the binary dictionaries is selected from the group comprised of: a compression of "intra" type, a compression of "inter" type, or a combination thereof, where with "intra" compression a compression is intended of a single dictionary, whereas with "inter" compression a compression is intended of at least two binary dictionaries together, generating at least one binary compressed object of dictionary type.

Advantageously, the compression of the binary encrypted fingerprints is selected from the group comprised of: a compression of "intra" type, a compression of "inter" type, or a combination thereof, where with "intra" compression a compression is intended of a single binary fingerprint, whereas with "inter" compression a compression is intended of at least two binary fingerprints together, generating at least one binary compressed object of fingerprint type.

Advantageously, the compression of the encrypted indexes is selected from the group comprised of: a compression of "intra" type, a compression of "inter" type, or a combination thereof, where with "intra" compression a compression is intended of only the binary encrypted indexes, whereas with "inter" compression a compression is intended of more binary indexes together, generating at least one binary compressed object of index type.

In a possible exemplary embodiment, the binary dictionaries can be compressed before being encrypted. Alternatively, the binary dictionaries can be firstly encrypted and then compressed. Similarly, the binary fingerprints can be firstly encrypted and then compressed, or firstly compressed and then encrypted.

In particular the encrypting and compressing operations of the binary dictionaries, of the binary fingerprints and of the binary indexes can be made even with a sequential logics that is different from the above described, and combining the two techniques to obtain the best safety/band optimization ratios, also on the basis of the kind of the content of the postal articles and of their level of confidentiality. For example, a partial encryption can be made, i.e. of at least one part of the objects (dictionaries, fingerprints, indexes), or a total encryption, i.e. of the complete objects, before the compression, or vice-versa an encryption after the compression can be made.

In particular, the binary indexes are associated even to the access identification codes obtained on the basis of the information of an addressee, or of a group of addressees, to which the postal articles are addressed. More in detail, the binary indexes allow the application program to operate on the receiving Set Top Box, and on which the addressee is logged-in, to determine immediately, among the plurality of data packets received in broadcasting, which of them are those of interest, through a partial or complete matching" of the access identification codes associated with the binary indexes, where the access key is generated by the Set Top Box on the basis of the information of the addressee specified when logging in, or by means of a remote control, or by means of a smart card during said identification step.

Advantageously, the step of defining and analysing said, or each, data packet received in broadcasting by said operative software on the Set Top Box comprises a step of encrypted "matching", for defining only data packets that are addressed to the addressee who has currently logged in, by means of credentials, or smartcard, the application program operating on the Set Top Box and for the following decrypting and de-compression steps for accessing the binary indexes, the binary fingerprints and the binary dictionaries necessary for reconstruction of the vectorial images of the postal articles which are addressed to the logged addressee.

In particular, the application program executes the above described step of decrypting the binary dictionaries on the basis of system algorithms/keys, which are predefined or generated dynamically according to predetermined algorithms and shared by the central operation unit and by the application software that run on the STB, which are not specific of a single addressee, but that in any case require the use of the access credentials entered by the predetermined addressee by means of smart card, or remote control of the decoder, in order to be actually executed, whereas the step of decrypting the binary fingerprints and the indexes is made on the basis of the particular access credentials entered by the predetermined addressee by means of a smart card or remote control of the decoder.

Advantageously in case of open circular mail, i.e. addressed to groups of not specified addressees, i.e. standard and not confidential postal articles, which normally are delivered in open envelope, for example commercial communications, or leaflets, for operations of geo-marketing, the techniques of encryption and decryption of all the objects which are relevant to the postal articles, such as binary dictionaries, binary fingerprints, binary indexes in case of representation in the vectorial meta-format of the postal articles, or compressed files based on JPEG, PNG or MPEG standards, in case of not vectorial representation, are based exclusively on system algorithms/keys not specific of a single addressee, and an identification step of the addressee is not necessary but exclusively of its postal address (or part of it) to ensure simply that the addressee belongs to the postal zone to which the open postal article has to be delivered.

Advantageously in addition to the principal binary objects, i.e. dictionaries, fingerprints and indexes as well as files based on JPEG, PNG and MPEG compression standards, service binary objects can be obtained adapted to make effective and efficient the receiving operation and following management of the data packets relative to the postal articles, either in vectorial meta-format or based on JPEG, PNG and MPEG standards, by an application software working on the Set Top Box, concerning a quick and selective definition thereof in the carousels or streams, a matching of the respective access identification codes with the authentication keys of the logged addressee, a loading in memory from the carousels or streams. Said service binary objects can be generic for more postal articles, for more addressees or groups of addressees or can be specific for single postal articles, single addressees or single groups of addressees, and normally are compressed and encrypted with the same techniques already used for dictionaries, fingerprints and indexes.

In particular, the step of broadcasting transmission is carried out through a transmission of at least one among:
- a plurality of binary dictionaries;
- a plurality of binary fingerprints;
- a plurality of binary indexes;
- a plurality of service binary objects deriving from said service data packets;
- a plurality of graphic or multimedia objects, in a format based on the JPEG, PNG or MPEG standards,
- a combination thereof

Advantageously, the step of defining said, or each, data packet addressed to a predetermined addressee is carried out on the basis of access credentials provided by the addressee same to the application that runs on said STB by input from a remote control, or by means of a smart card in said logging-in step.

In particular, the compression of said binary dictionaries, of said binary fingerprints, of said binary indexes, of said graphic or multimedia objects, in a format based on the JPEG, PNG or MPEG standards, and of said service binary objects is selected from the group comprised of:
- an individual compression, i.e. a compression of "intra" type, said individual compression adapted to compress singularly each binary dictionary of said plurality of binary dictionaries, each binary fingerprint of said plurality of binary fingerprints, each binary index of said plurality of binary indexes, each graphic or multimedia object of said plurality of graphic or multimedia objects in said format based on the JPEG, PNG or MPEG standards, and each service binary object of said plurality of service binary objects;
- a transversal compression, i.e. a compression of "inter" type, said transversal compression adapted to compress together at least two of said binary dictionaries, of said binary fingerprints, of said binary indexes, of said graphic or multimedia objects, and of said service binary objects, of said plurality of binary dictionaries, of said plurality of binary fingerprints, of said plurality of binary indexes, of said plurality of graphic or multimedia objects in said format based on the JPEG, PNG or MPEG standards, and of said plurality of service binary objects, respectively;
- a combination thereof.

Advantageously, a step is provided of compression of said plurality of graphic or multimedia objects in said format based on said JPEG, PNG or MPEG standards.

Advantageously, said individual compression and/or said transversal compression of said objects representative of said postal articles, i.e. of said binary dictionaries, of said binary fingerprints, of said binary indexes, of said graphic or multimedia objects, in said format based on the JPEG, PNG or MPEG standards, and of said service binary objects is a compression of LZMA type.

Preferably, the step of encryption that causes the production of said data packets in said digital compressed and encrypted format can be selected from the group comprised of:
- a symmetric type encryption;
- an asymmetric type encryption.

In particular, the step of encryption, either of symmetric or asymmetric type, is differentiated between objects, i.e. among binary dictionaries, binary fingerprints, binary indexes, service binary objects, files based on JPEG, PNG or MPEG standards, which are relative to more postal articles, and/or more users/addressees and/or more groups of addressees, and objects, i.e. among binary dictionaries, binary fingerprints, binary indexes, service binary objects, files based on JPEG, PNG or MPEG standards, which are relative to single postal articles, to single users/addressees or single groups of addressees, to allow both the general safety and protection of the data and the selective and exclusive access to the confidential data by the designated addressees on the basis of the credentials entered by the designated addressee in the application running on the decoder by means of a smart card or remote control.

Advantageously, before the step of broadcasting transmission a step is provided of segmentation of said plurality of binary dictionaries, of said plurality of binary fingerprints, of said plurality of binary indexes, of said plurality of service binary objects, of said plurality of files based on JPEG, PNG or MPEG standards, said segmentation adapted to reduce the size of the data packets of said binary dictionaries, of said binary fingerprints, of said binary indexes, of said service binary objects and of said files based on JPEG, PNG or MPEG standards, which have a size larger than a predetermined size limit into a plurality of data packets of size less than said predetermined size limit. In particular said size limit can be defined by the broadcasting technology used for the broadcasting transmission, or defined by the Set Top Box available on the market used for receiving.

In particular, after the step of segmentation a step is provided of entering said plurality of segmented data packets, i.e. obtained from said step of segmentation, into one, or more carousels and/or into specific streams according to an optimization logic of the band and of the receiving performance.

In particular, the plurality of original postal articles recorded by the central operation unit can be in a format selected from the group comprised of:
- paper format;
- digital format.

In particular, the generation of the predetermined digital compressed format by the central operation unit starting from the original format of the postal articles can be finalized to define the possible text, graphic and multimedia resources shared within the single postal article or among more postal articles to provide one form of intra-inter compression of the postal articles of high quality and lossless (without loss of data) and specifically to the limitation to the band of transmission necessary for massive transmission of multimedia documents. The digital format sent, instead, by the sender to the central operation unit can be for example in pdf, doc, print spool format or the like, as well as multimedia files, image format, and, in particular, all formats typically used by the sender for transferring the own flows to printing centres.

Advantageously, the data packets of said plurality of data packets specific of a predetermined addressee comprise, or are connected for example by, pointers, which point to at least one of the following data:
- identification access code of the addressee or the group of users/addressees, in particular in encrypted form of the respective postal articles;
- identification code of the sender of the respective postal articles;
- postal article identification code of the respective postal articles;
- date of the broadcasting transmission;
- date of receipt of the postal article by the central operation unit;
- a combination thereof.

In particular, the identification access code is generated by the central operation unit on the basis of the information relative to the addressee or to the group of users/addressees to which the postal article is addressed and is transmitted integrated in the data packets, typically in encrypted form, to assist the application software running on the Set Top Box to select only data packets of interest for the logged addressee, still remaining the need of decrypting the packets in order to use them. More precisely, the identification access code is used for communicating, to the application program operating on the Set Top Box, the packets of interest for the user on the basis of the credentials of the logged addressee, said access credentials entered by means of a remote control of the Set-Top Box or by means of smartcard and computed by the application program installed on the Set-Top Box during the above described identification step, for creating an access key that has to be compatible (match and partial match) with the identification access code created and associated to the postal article by the central operation unit.

Advantageously, the original postal article can comprise, furthermore, a bar code. More in detail, the bar code makes it possible to track the postal article.

In particular, the bar code, or equivalent digital code, can be associated with the original postal article by the central operation unit if said postal article does not have an own code. Alternatively, the bar code can be applied on the original postal article directly by the sender.

In particular, the broadcasting transmission is selected from the group comprised of:
- digital satellite television broadcasting;
- digital cable television broadcasting;
- digital earth television broadcasting;
- digital television broadcasting for portable mobile devices;
- digital broadcasting on VHF/UHF
- digital broadcasting on WIMAX;
- or a combination thereof.

In particular, after the step of receiving said postal article a step can be provided of storing the postal article in a memory associated with the Set-Top Box.

Advantageously, the step of storing can provide a step of recording in the memory of the Set-Top Box the article in a meta-format adapted to be displayed again locally and at least one of the following data relative to the article:
- storing date;
- storing time;
- displaying date;
- displaying time;
- identification data of the addressee;
- identification data of the sender;
- identification data of the postal article;
- identification data of the geographic area where the postal article has been received;
- identification data of the frequency at which the transmission has been made of the postal article.

Advantageously, a step is provided of association of an identification access code, typically encrypted, to each data packet of said plurality of data packets, said association carried out by the central operation unit before carrying out the broadcasting transmission of the plurality of data packets.

In particular, the identification step of the addressee for checking the fulfilment of the requirements of the addressee to display and store said postal article can be carried out by the application program installed on the Set-Top Box.

In a first exemplary embodiment, the identification step comprises:
- entering by the addressee addressee data selected from the group comprised of: user name, PIN numerical code, password, postal address (place, street, street number);
- applying a predetermined algorithm to said data by said application program that runs in said Set-Top Box generating an access key adapted to determine a single addressee or a group of addressees;

- using said access key by said application program for direct definition of the data packets of interest for the addressee by checking compatibility with the access identification codes of the data packets of said articles. Alternatively, the identification step can comprise the following steps:
- inserting a smart card containing predetermined data relative to the addressee in a smart card reader, said smart card reader operatively connected to said Set-Top Box;
- entering a PIN associated with said smart card;
- applying a predetermined algorithm to said data by said application program that runs in said Set-Top Box generating an access key;
- using said access key by said application program for direct definition of the data packets of interest for the addressee by checking compatibility with the access identification codes associated with the data packets relative to said articles.

In a further exemplary embodiment, the identification step is made interactively by the central operation unit and provides a return channel of the Set-Top Box. In particular the return channel is adapted to connect the Set-Top Box to the central operation unit by a telephone network, an xDSL network or a wireless network.

In this case, the identification step can comprise the following steps:
- entering by the addressee a user name and a password;
- sending said user name and said password to said central operation unit, said sending step occurring through said return channel on a safe and authenticated protocol;
- checking correspondence of said user name and said password to a registered addressee;
- transmission by the central unit to the application program that runs on the Set-Top Box through said return channel of the Set-Top Box of the access key of the addressee, said transmission occurring only in case of positive result of said checking step;
- using said access key by said application program for direct definition of the data packets of interest for the addressee by checking compatibility

with the access identification codes of said articles.

In particular, the step of defining the data packets that are addressed to a predetermined addressee does not affect the need of the next operations of a suitable decrypting to ensure safety and authentication when attempting to access the postal products.

In particular, displaying the postal article on said channel of the TV-set is started only on the data packets that fulfil the step of matching by said application program on the compatibility of the identification access code, which is associated to the postal article by said central operation unit, with the access key of the addressee and then pass the decrypting step. The access key can be generated locally by the application that runs on the Set-Top Box, or alternatively, by the central operation unit, always starting from the access credentials.

Advantageously, a step is provided of communication between the application program and the central operation unit, said step of communication carried out by a return channel of the Set-Top Box. More precisely, the return channel is adapted to connect the Set-Top Box to an external network through which it is possible to establish a point-to-point communication with the central operation unit, said communication being synchronous or asynchronous.

Advantageously, the central operation unit transmits also an updated list of the transmitted postal articles, orof articles awaiting to be transmitted, the single postal articles in said list being always associated with an identification access code of the addressee or the group of addressees which are addressed to said postal articles and then said postal articles of said list being detectable and displayable only in case of compatibility between the access key of the addressee with the identification access code, which is associated with said postal articles in said list, said list being in turn encrypted with the same techniques used for operation of the binary fingerprints and then always understandable and displayable notwithstanding operations of verification and decrypting already provided for binary fingerprints, on the basis of the access credentials or the smart-card entered on the Set Top Box by the application program operating on the Set Top Box.

In particular, through the return channel, the application program operating on the Set Top Box can send to the central operation unit at least one part of the data relative to displayed postal articles, to reading and receipt notifications, and preferably recorded in the memory of the Set-Top Box, i.e. the data of the read and received postal article, or a demand by the addressee for transmitting specific postal articles, or a reminder of transmission of the postal articles not yet delivered to the addressee.

Advantageously, through the return channel, the application program operating on the Set Top Box can send to the central operation unit the request for a specific postal article and receive it through the return channel same, alternatively to the broadcasting transmission, for displaying it. In particular this use of the return channel as carrier of the postal articles, always in compressed and preferably encrypted format, can be finalized to receiving and displaying archived postal articles, i.e. not included in the broadcasting transmission (on air), and present in the central storic archive at the central operation unit, or even to receiving and displaying postal articles still in the broadcasting transmission (on air) in conditions of particularly crowded broadcasting band. In particular, furthermore, an interaction step can be provided of the addressee with the application program that runs on the Set-Top Box. During the interaction step at least one of the following operations can be carried out:
- identifying the addressee (login);
- displaying the list of the postal articles already transmitted or in transmission, already read or to read, which are addressed to the addressee;
- displaying a postal article in transmission (on air).
- displaying and compilation of questionnaires, i.e. postal articles adapted to collect data for market analysis, survey, polls, that, once received and displayed, provide the possibility for the addressee to give a response to particular questions in the postal article using the remote control of the Set Top Box;
- transmission of the response to questionnaires provided by the addressee to the central operation unit through a synchronous or asynchronous connection on the return channel, in particular the response can be personal, i.e. associated with the addressee that has provided the response, or anonymous, aggregating statistically the response;
- interactive researches on the postal articles present in the memory of the Set Top Box;
- requesting to display a predetermined postal article present in the memory of the Set-Top Box;
- sending a specific request for transmission to the central operation unit of a predetermined postal article not present in the memory of the Set-Top Box but present in the transmitted and received list, containing the documents already transmitted but not presently in transmission;
- sending generic request for transmission to the central operation unit of the postal articles not yet transmitted;
- cancellation of a predetermined postal article from the memory of the Set-Top Box;
- sending other requests of service to the central operation unit, such as requests of archiviation on the central operation unit, or optical substituting archiviation;
- interactive researches on the postal articles present in the central historical archives of the system through synchronous bidirectional interaction on the return channel with the central operation unit; access to postal articles present on the central historical archives of the system, up to receiving the postal article either from broadcasting transmission or directly by means of the return channel connected point-to-point to the central operation unit.

For example, the addressee can interact with the application program that runs on the Set-Top Box by the remote control of the TV set.

In particular, the Set-Top Box can be integrated in the TV set, or it can be out of it, provided it has the interactivity requirements required by the particular used broadcasting platform.

Advantageously, the application program can be sent to the Set-Top Box by the central operation unit by means of a broadcasting transmission, loading it in the same carousels/streams of the data or on alternative carousels/streams. Alternatively, the application program can be provided to the addressee on a special digital support and then installed on the Set-Top Box by a guided installation procedure.

Alternatively to the use of the application program and of the return channel of the Set-Top Box, the interaction step of the addressee with the central operation unit can be made through one of the following devices:
- a Personal Computer;
- a palmtop;
- a smartphone;
- a mobile phone;
- a fixed telephone.

In particular, the interaction step can provide sending an SMS, or an MMS, or an e-mail or a phone call to a service centre by the addressee with which the transmission is requested of the postal article or articles on a particular geographic area in which the predetermined Set-Top Box resides or other requests.

### Brief description of the drawings

The invention will be made clearer with the following description of an exemplary embodiment thereof, exemplifying but not limitative, with reference to the attached drawings wherein:
- Fig. 1A shows in a block diagram a possible succession of steps through which the method is operated, according to the invention, for delivering postal articles to an addressee;
- Fig. 1B shows in a block diagram a succession of steps alternative to that of Fig. 1A through which the method is operated for delivering postal articles to an addressee;
- Fig. 2 shows diagrammatically a vectorial graphical construct that can be used in the method, according to the invention;
- Fig. 3 shows in a block diagram a possible succession of steps through which it is possible to convert the original postal articles into data packets in a predetermined digital compressed format;
- Fig. 4 shows in a block diagram a possible technique of broadcasting transmission that can be used by the method, according to the invention;
- Fig. 5 shows in a block diagram a possible succession of steps through which the postal article delivered to the addressee is displayed on the TV-set of the addressee same;
- Fig. 6 shows diagrammatically a postal article digitally transmitted with the method, according to the invention;
- Fig. 7 shows diagrammatically the main devices that make up an apparatus, according to the invention, for delivering a postal article to an addressee.

### Detailed description of some exemplary embodiments

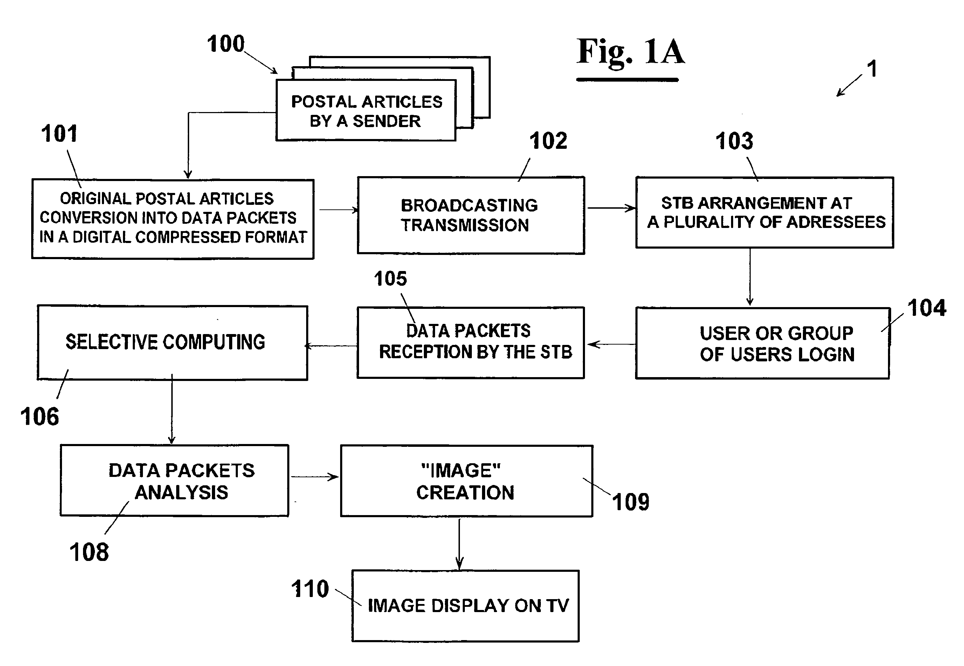

In Fig. 1A a flow-page 1 is diagrammatically shown in which the main phases are depicted of the method, according to the invention, for delivering a postal product to an addressee. In particular the method provides a step of collecting a plurality of original postal articles made by a sender by a central operation unit, block 100. The central operation unit converts, then, the plurality of original postal articles into a plurality of data packets in a predetermined digital compressed format, block 101.

The plurality of data packets in said digital compressed format is, then, broadcasted on at least one transmission frequency through a predetermined digital broadcasting platform, block 102. The method comprises, furthermore, a step of arranging at a plurality of addressees a plurality of Set-Top Boxes (STB) tuned with said transmission frequency, block 103. More in detail, each Set-Top Box is used by a predetermined addressee. Furthermore, on each Set-Top Box a predetermined application program runs. Each user does then a logging-in step on the application program that runs on the personal Set Top Box, block 104. More precisely, the logging-in step is done using access credentials entered by means of a remote control, or smart card.

After the logging-in step by the addressee, the Set-Top Box receives the data packets in said digital compressed format, block 105. Then, a selective computing step of the plurality of data packets is done by each application program that runs on each Set-Top Box, block 106. More in detail, the computing step comprises a step of selectively determining among the plurality of data packets the data packets that are addressed to a predetermined addressee, or to each addressee of a predetermined group of addressees, connected to a predetermined Set-Top Box and logged to the application program that runs on said Set-Top Box. The step of definition is carried out In particular on the basis of the information used by each user in the above described logging-in step. Then, a step follows of analysis of said, or each, determined data packet, block 108, in order to start a step of creation from said, or each, data packet of an "image" representative of the original postal article to which the, or each, data packet is associated, block 109. Once created, the image is, finally, displayed on a TV-set connected to the predetermined Set-Top Box, block 110.

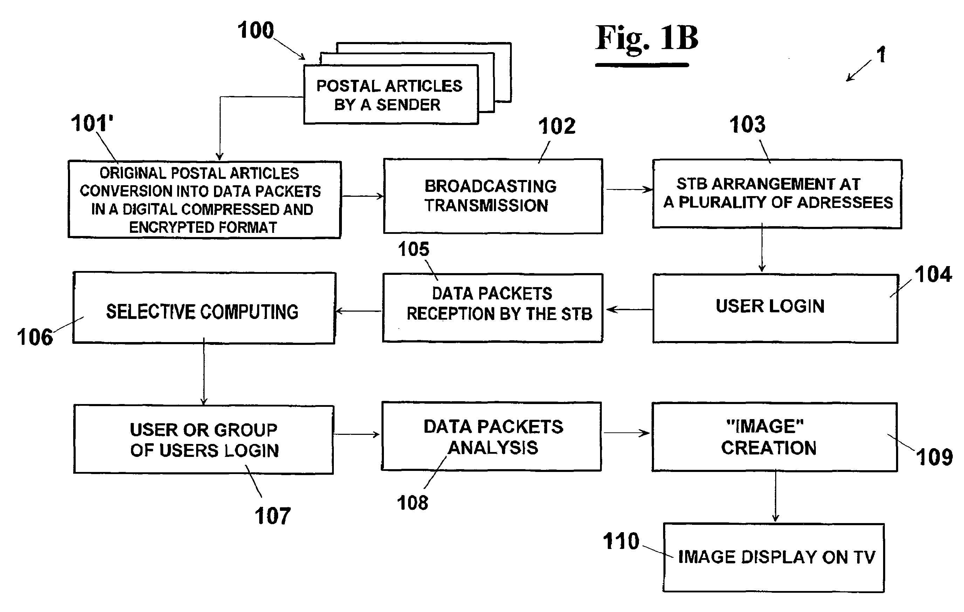

In an exemplary embodiment of the invention and diagrammatically shown in Fig. 1B, the central operation unit converts the plurality of original postal articles into a plurality of data packets in a predetermined digital compressed and encrypted format, block 101'. In this case, before the step of creation of the image a step is provided of decrypting the data packets, block 107. More in detail, the decrypting step is carried out on the basis of the addressee access credentials, or the smartcard, provided by the addressee for connection to application operating on the Set Top Box.

The digital compressed format can be a graphical format based on the JPEG, PNG or MPEG standards, or a vectorial meta-format, or still a combination of such formats. In particular in case of open circular mail, i.e. addressed to a group of users, that has mainly graphical nature, or multimedia nature, for example leaflets, the digital compressed format is preferably a graphical format based on the JPEG, PNG or MPEG standards.

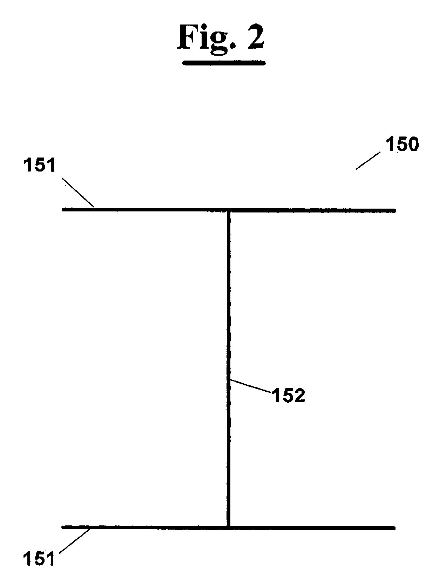

In case of postal articles addressed to personal addressees, each characterised by personal access credentials, the digital compressed format is instead a vectorial meta-format. In this case, the central operation unit executes a conversion of the plurality of postal articles present in the database into a plurality of data packets containing a plurality of vectorial graphical constructs. More precisely, each vectorial graphical construct comprises at least one elementary vectorial element, for example a vertical line, a horizontal line, a point etc. and a plurality of data/instructions for combining the graphic vectorial components and to allow a reconstruction of the original postal article. For example, as diagrammatically shown in Fig. 2, the vectorial graphical construct 150 that identifies the letter "I" comprises as vectorial elementary components one horizontal line 151, repeated two times, and a vertical line 152 in addition to the coordinates of the cross points of horizontal lines 151 with vertical line 152. The conversion is preferably obtained using a vectorial meta-format derived from the standard SVG "Scalable Vectorial Format".

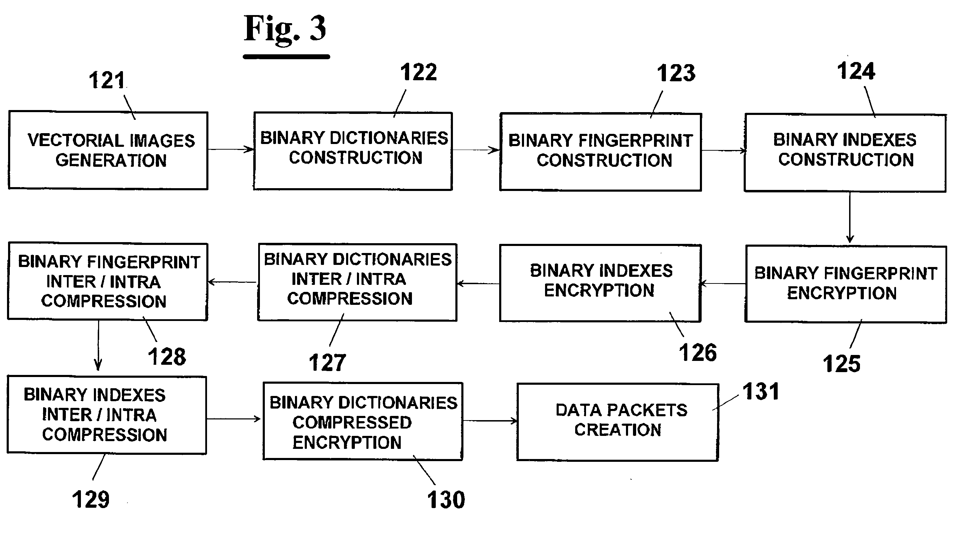

As shown in Fig. 3, the step of converting comprises a step of generating a vectorial "image" for each original postal article using rules and syntax of the vectorial meta-format, block 121. A step follows of construction of at least one binary dictionary containing the vectorial constructs that are recurring among the different vectorial images of the different postal articles, or recurring in a same vectorial image of the same postal article, block 122. There is then a generation of a predetermined binary fingerprint associated with each page of each vectorial image of each postal article, block 123. In particular each binary fingerprint comprises both specific possible vectorial constructs of a predetermined page, i.e. not recurrent in other pages and then not included in the dictionaries, and all the pointing binary instructions in the fingerprint same and external to the dictionaries, in order to reconstruct the vectorial image of the page of the original postal article to which the binary fingerprint relates.

Furthermore, there is a step of indexing, in which the plurality of binary fingerprints are indexzed for determining key words, among which also sender, object, addressee, page, obtaining a plurality of binary indexes, block 124. The procedure provides then a step of encrypting the binary fingerprints, block 125. Similarly, there is a step of encrypting the binary indexes, block 126.

This way, an exclusive and selective access is ensured of the postal article to the single addressee followed by a decrypting step made on the basis of access credentials as entered by the addressee on the application program operating on the Set Top Box.

Then, further steps are provided of an intra/inter compression of the binary dictionaries, generating one, or more binary compressed objects of dictionary type, block 127, an intra-inter compression of the encrypted binary fingerprints, generating at least one binary compressed object of fingerprint type, block 128, and an intra-inter compression of the binary encrypted indexes, generating at least one binary compressed object of index type, block 129. More in detail, with "intra" compression a compression is intended of a single dictionary, of only the fingerprint, or only the index, i.e. an individual compression, whereas with "inter" compression a compression is intended of more dictionaries, of more fingerprints, or of more indexes together, generating at least one binary compressed object of dictionary type, fingerprint and index, respectively, i.e. a transversal compression. In a preferred exemplary embodiment, the individual and/or transversal compression of the binary dictionaries, of the binary fingerprints and of the binary indexes is a compression of LZMA type.

Then, a step follows of encrypting the compressed dictionaries, block 130. More precisely, the encrypting step of the compressed dictionaries is carried out on the basis of system algorithms/keys, i.e. identical for different addressees, in order to be accessible by operative software that run on the Set Top Box of different addressees.

Finally, there is a step of creating a plurality of data packets, obtained by lexical segmentation, i.e. on the basis of the particular rules of the interactive digital broadcasting technique used, for generating the carousel, or the streams, or in any case for preparing to the digital broadcasting transmission, block 131.

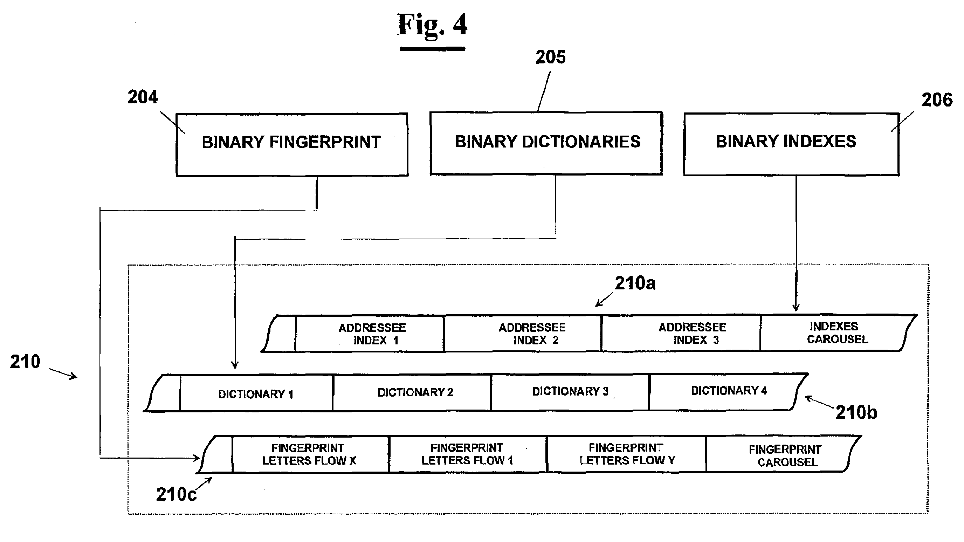

As diagrammatically shown in Fig. 4, the step of broadcasting transmission of the plurality of data packets can be made using "carousel" techniques. More precisely, the binary dictionaries 205, the binary fingerprints 204 and the indexes 206 obtained from the central operation unit are put in one, or more carousels/streams. For example, the binary dictionaries 205 are put in a first carousel 210b, the binary fingerprints 204 in a second carousel 210c and the binary indexes 206 in a third carousel 210a. The carousels 210a-210c are then put in broadcasting transmission. The number of the carousels/streams is chosen on the basis of optimization logic adopted by the central operation unit.

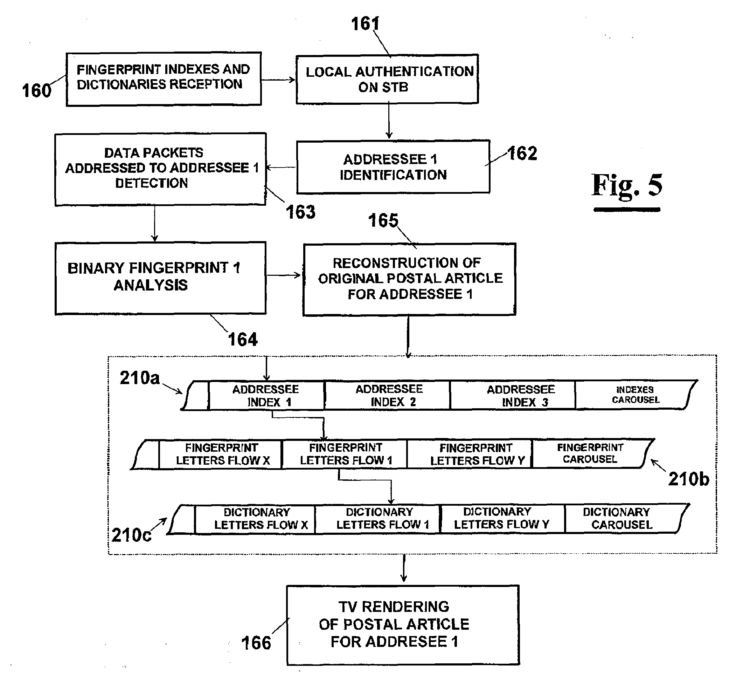

As diagrammatically shown in Fig. 5, once broadcasted, the carousels, or the stream, 210a-210c are received by the many Set Top Boxes (STB) of the respective addressees tuned with the transmission frequency, block 160. The application program that runs on each STB starts then a step of local authentication, block 161 and then identifies the predetermined addressee 1 owner of the predetermined STB, block 162. Such step can be carried out through the entered access credentials by the remote control of the Set Top Box, or by means of smartcard. More in detail, the encryption keys with which it is possible to decrypt the data packets are relative to the entered credentials, or present in the smartcard. This way, only the authorized addressees are capable of displaying the postal articles addressed to them.

On the basis of the identification information of the addressee, the application program detects among the plurality of indexes, binary fingerprints and binary dictionaries received by the STB on which it runs, the indexes and the binary fingerprints set to the addressee 1 and therefore the dictionaries that have to be used, block 163. The personal binary fingerprints for user 1 are then analysed, or read, by the application program, block 164. Then, a step follows of reconstruction of the original postal article 1 using the instructions contained in the binary fingerprints same and in the binary dictionaries to them associated, block 165, obtaining a set of graphic controls adapted to the generation of the images making up the copy of the original postal article from which they derive. The application program effects, then, a graphical rendering generating all the pages of the original postal article that is, finally, displayed on the TV-set of the addressee 1 in the form of a determined "image".

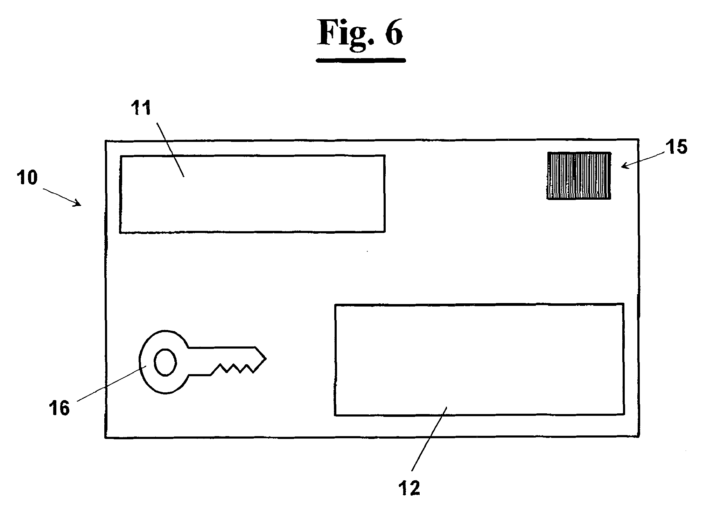

Normally, as diagrammatically shown in Fig. 6, a postal article 10 comprises a field 11 for the data relative to the sender, a field 12 for the data relative to the addressee, a bar code 15 through which it is possible to keep track the transmission of the postal article 10 and an identification access code to ensure the displaying and reading selectivity 16. More precisely, the bar code 15 can be applied by the central operation unit that carries out also the association of the identification access code 16, or can be associated to the postal article directly by the sender.

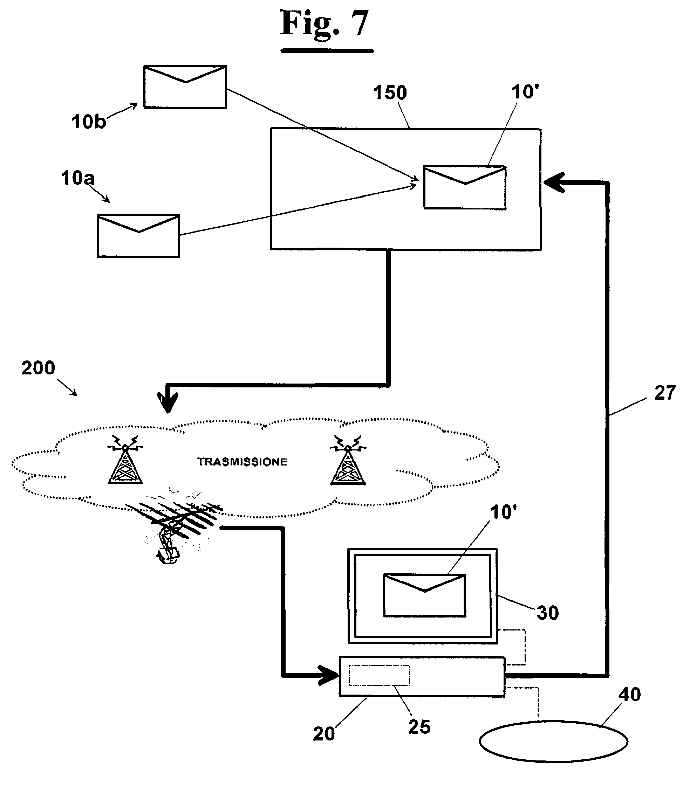

As diagrammatically shown in Fig. 7, original postal article 10 delivered to central operation unit 150 can be in paper format 10a, or in digital format 10b. In both cases, central operation unit 150 provides always to convert the original postal article 10a, or 10b, into a digital personal format 10'. The central operation unit delivers the article in digital personal format 10' on a measured frequency 200 of a broadcasting transmission, for example a satellite transmission, or a cable transmission, or a earth digital broadcasting, or still a transmission for portable mobile devices.

The article in digital personal format 10' is then received by a Set-Top Box 20, or STB, tuned with the frequency of broadcasting transmission 200 and computed by an application program 40 that runs on Set-Top Box 20 for be, finally, displayed on a predetermined channel of a TV-set 30 operatively connected to Set-Top Box 20. It can have a memory 25 on which, in addition to postal article in meta-format adapted to be reproduced, at least one of the following data can be recorded: storing date, storing time, displaying date, displaying time, identification data of the addressee, identification data of the sender, identification data of the postal article, identification data of the geographic area and of the frequency at which the postal article has been received.

The application program 40 can, furthermore, communicate with central operation unit 150 through a return channel 27 of Set-Top Box 20. In particular the application program 40 can send to central operation unit 150 through the return channel at least one part of the data relative to the articles displayed and preferably recorded in memory 25 of Set-Top Box 20, or a desired request from the addressee.

Return channel 27 can be used by the central operation unit also for transmitting the postal article 10 in case of blocked broadcasting band, or if the broadcasting transmission band is very crowded. This allows sending immediately the postal article in digital format avoiding a delay in the delivery.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for delivering a postal product to a predetermined addressee **characterised in that** it comprises the steps of:
- collecting in a database, arranged in a central operation unit, a plurality of original postal articles drafted by at least one sender, each postal article of said plurality associated with a postal article identification code;
- converting by the central operation unit said plurality of original postal articles into a plurality of data packets in a predetermined digital compressed format;
- broadcasting by said central operation unit said plurality of data packets in said digital compressed format, said broadcasting of said plurality of data packets occurring on at least one transmission frequency through a predetermined digital broadcasting platform;
- arranging at a plurality of addressees a plurality of Set-Top Boxes tuned with said transmission frequency, each Set-Top Box of said plurality of Set-Top Boxes used by a predetermined addressee of said plurality of addressees, on each Set-Top Box of said plurality of Set-Top Boxes running a predetermined application program, each Set-Top Box adapted to receive all the data packets of said plurality of data packets in said predetermined digital compressed format;
- logging-in said addressee on said application program of said Set Top Box, said logging-in step occurring by entering the addressee access credentials, or by means of a remote control, or by means of a smartcard;
- receiving said plurality of data packets in said digital compressed format by each Set-Top Box of said plurality of Set-Top Boxes;
- selectively computing, by each application program that runs on each Set-Top Box of said plurality of Set-Top Boxes, said plurality of data packets received by each Set-Top Box in said digital compressed format, said computing step comprising the steps of:
- identifying a predetermined addressee, or a predetermined group of addressees, to which a predetermined postal article has to be delivered, said, or each, addressee being connected to a predetermined Set-Top Box of said plurality of Set-Top Boxes and being logged to the corresponding application program;
- selectively determining, among said plurality of data packets, addressee data packets that are addressed to said predetermined addressee, or to said predetermined group of addressees, identified in said identification step;
- analysing said, or each, determined data packet;
- creating from said compressed data packets an image representative of said predetermined original postal article;
- displaying said image of said predetermined postal article on a TV-set of said predetermined addressee, said TV-set operatively connected to said predetermined Set-Top Box.

2. Method, according to claim 1, wherein said predetermined group of addressees belongs to a same geographic area identified on the basis of data relative to the domicile/residence address of said addressee selected from the group comprised of: at least one city, at least one city area, at least one road, in this case said step of identificatiof being made on the basis of said data identifiedve of said geographic area of to which belongs of said addressees belonging to said predetermined unit and generating authentication keys associated with said group of addressees.

3. Method, according to claim 1, wherein said step of broadcasting said plurality of data packets is carried out using carousel techniques comprising a cyclical transmission of data and/or streaming techniques.

4. Method, according to claim 1, wherein said predetermined digital compressed format is selected from the group comprised of:
- a vectorial meta-format whereby said plurality of data packets contain a plurality of vectorial graphical constructs, each vectorial graphical construct of said plurality comprising at least one vectorial elementary component and a plurality of data/instructions for operation of the contained vectorial elementary components and of the packets same, i.e. for their definition and sequentialization, for operation of the safety of the accesses, of the safety of the data, and for an selective access, in order to reconstruct faithfully the original postal articles and assuring an access to single users/addressees to which said postal articles are actually addressed, said vectorial meta-format being derived from the standard SVG "Scalable Vector Graphics", such that it is adapted to a serial interpretation of the controls in order to minimize the use of memory in phase of "parsing", i.e. a step of syntactic analysis through which a continuous stream is analysed as input, and to minimize completely the size in memory of the vectorial representation.
- a graphical format based on the JPEG format, or MPEG standards, or PNG.

5. Method, according to claim 4, wherein said step of converting comprises the following operations:
- generating vectorial "images" of said original postal articles, said generating step carried out using rules and syntax of said vectorial meta-format;
- creating at least one binary dictionary containing vectorial constructs that are recurring among the different vectorial images of the different postal articles, or recurring in a same vectorial image of the same postal article;
- creating a predetermined binary fingerprint associated with each page of each vectorial image of each postal article, each binary fingerprint comprising both possible specific vectorial constructs of that specific page, i.e. not recurrent in other pages and then not included in the dictionaries, and all the pointing binary instructions within the fingerprint same or to the dictionaries, in order to reconstruct the vectorial image of the page of the original postal article to which the binary fingerprint relates;
- creating binary indexes, i.e. indexing, of said plurality of binary fingerprints for determining key words, among which also sender, object, addressee, page, obtaining a plurality of binary indexes;
- encrypting said binary fingerprints to ensure an exclusive and selective access to the single addressee, or group of addressees,by a following decrypting step made on the basis of the access credentials as entered by the addressee on the application program operating on the Set Top Box that carries out said logging-in step for enabling the step of receiving the personal mail;
- encrypting said binary indexes to ensure an exclusive and selective access to the single addressee, or groups of addressees, by a following decrypting step made on the basis of said access credentials as entered by the addressee on the application program operating on the Set Top Box that carries out said logging-in step, for enabling the step of receiving the personal mail;
- compressing said binary dictionaries;
- compressing said encrypted binary fingerprints;
- compressing said encrypted binary indexes;
- encrypting said compressed dictionaries on the basis of generic algorithms/keys, i.e. not specific of the different addressees, since they have to be accessible by the operative software on the Set Top Box of different addressees for reconstruction of the different postal articles that use the dictionaries;
- creating a plurality of data packets, obtained by lexical segmentation, i.e. on the basis of the particular rules of the interactive digital broadcasting technique used for generating the carousels or the streams, or in any case for preparing to the digital broadcasting transmission and for enabling the receiving step by the Set Top Box available on the market.

6. Method, according to claim 5, wherein said step of defining and analysing said, or each, data packet received in broadcasting by said operative software on the Set Top Box comprises a step of "matching" for defining only data packets that are addressed to the addressee who is currently logged in by means of credentials, or smartcard, to the application program operating on the Set Top Box and a following decrypting and de-compression for access to the binary indexes, to the binary fingerprints and to the binary dictionaries necessary for reconstruction of the vectorial images of the postal articles which are addressed to the logged addressee.

7. Method, according to claim 1, wherein said step of broadcasting transmission is carried out through a transmission of at least one among:
- a plurality of binary dictionaries;
- a plurality of binary fingerprints;
- a plurality of binary indexes;
- a plurality of service binary objects obtained from said plurality of service data packets;
- a plurality of graphic or multimedia objects, in a format based on the JPEG format, or PNG, or MPEG standards;
or a combination thereof.

8. Method, according to claim 1, wherein a step of encryption is also provided for causing the production of said data packets in a digital compressed and encrypted format that is selected from the group comprised of:
- a symmetric type encryption;
- an asymmetric type encryption.

9. Method, according to claim 8, wherein before said step of broadcasting a step is provided of segmentation of said plurality of binary dictionaries, of said plurality of binary fingerprints, of said plurality of binary indexes, of said plurality of service binary objects, of said plurality of files based on JPEG, PNG or MPEG standards, said segmentation adapted to reduce the size of the data packets of said binary dictionaries, of said binary fingerprints, of said binary indexes, of said service binary objects and of said files based on JPEG, PNG or MPEG standards, which have a size larger than a predetermined size limit into a plurality of data packets of size less than said predetermined size limit.

10. Method, according to claim 9, wherein after said step of segmentation a step is provided of entering said plurality of segmented data packets, i.e. obtained from said step of segmentation, into one, or more carousels and/or into specific streams according to an optimization logic of the band and of the receiving performance.

11. Method, according to claim 1, wherein said broadcasting transmission is selected from the group comprised of:
- digital satellite television broadcasting;
- digital cable television broadcasting;
- digital earth television broadcasting;
- digital television broadcasting for portable mobile devices;
- digital broadcasting on VHF/UHF
- digital broadcasting on WIMAX;
- or a combination thereof.

12. Method, according to claim 1, wherein said identification step of said addressee comprises the following steps:
- entering addressee data selected from the group comprised of: user name, PIN numerical code, password, postal address (place, street, street number) by the addressee;
- applying a predetermined algorithm to said data by said application program that runs in said Set-Top Box generating an access key adapted to determine a single addressee or a group of addressees;
- using said access key by said application program for direct definition of the data packets of interest for the addressee by checking compatibility with the access identification codes of the data packets of said articles;

13. Method, according to claim 1, wherein said identification step of said addressee comprises the following steps:
- inserting a smart card containing predetermined data relative to the addressee in a smart card reader, said smart card reader operatively connected to said Set-Top Box;
- entering a PIN associated with said smart card;
- applying a predetermined algorithm to said data by said application program that runs in said Set-Top Box generating an access key;
- using said access key by said application program for direct definition of the data packets of interest for the addressee by checking compatibility with the access identification codes associated with the data packets relative to said articles.

14. Method, according to claim 1, wherein said identification step is made interactively from said central operation unit and provides a return channel of said Set-Top Box, said return channel adapted to connect said Set-Top Box to said central operation unit by a telephone network, an xDSL network or a wireless network, said identification step comprising in this case the following steps:
- entering by the addressee a user name and a password;
- sending said user name and said password to said central operation unit, said sending step occurring through said return channel on a safe and authenticated protocol;
- checking correspondence of said user name and said password to a registered addressee;
- transmission by the central unit to the application program that runs on the Set-Top Box through said return channel of the Set-Top Box of the access key of the addressee, said transmission occurring only in case of positive result of said checking step;
- using said access key by said application program for direct definition of the data packets of interest for the addressee by checking compatibility with the access identification codes of said articles.

15. Method, according to claim 1, wherein, furthermore, an interaction step is provided of said addressee with said application program that runs on said Set-Top Box, during said interaction step at least one of the following operations being done:
- identifying the addressee (login);
- displaying the list of the postal articles already transmitted or in transmission, already read or to read, which are addressed to the addressee;
- displaying a postal article in transmission (on air).
- displaying and filling in questionnaires, i.e. postal articles adapted to collect data for market analysis, survey, polls, that, once received and displayed, provide the possibility for the addressee to give a response to particular questions in the postal article using the remote control of the Set Top Box;
- transmission of the response to questionnaires provided by the addressee to the central operation unit through a synchronous or asynchronous connection on the return channel, in particular the response can be personal, i.e. associated with the addressee that has provided the response, or anonymous, aggregating statistically the response;
- interactive researches on the postal articles present in the memory of the Set Top Box;
- requesting to display a predetermined postal article present in the memory of the Set-Top Box;
- sending a specific request for transmission to the central operation unit of a predetermined postal article not present in the memory of the Set-Top Box but present in the transmitted and received list, containing the documents already transmitted but not presently in transmission;
- sending generic request for transmission to the central operation unit of the postal articles not yet transmitted;
- deleting a predetermined postal article from the memory of the Set-Top Box;
- sending other requests of service to the central operation unit, such as requests of archiving on the central operation unit, or optical substituting archiving;
- interactive researches on the postal articles present in the central historical archives of the system through synchronous bidirectional interaction on the return channel with the central operation unit;
- access to postal articles present on the central historical archives of the system, and receiving the postal article either from broadcasting transmission or directly by means of the return channel connected point-to-point to the central operation unit.

## Patentansprüche

1. Verfahren zur Lieferung einer Postsendung an einen vorbestimmten Adressaten, **dadurch gekennzeichnet, dass** es die folgenden Schritte umfasst:
- Sammeln einer Vielzahl von ursprünglichen Postsendungen, die von mindestens einem Absender verfasst sind, in einer Datenbank, die in einer zentralen Bedieneinheit angeordnet ist, wobei jede Postsendung der Vielzahl mit einem Postsendungs-Identifizierungscode verknüpft ist;
- Umwandeln der Vielzahl von ursprünglichen Postsendungen durch die zentrale Bedieneinheit in eine Vielzahl von Datenpaketen in einem vorbestimmten digitalen komprimierten Format;
- Senden der Vielzahl von Datenpaketen durch die zentrale Bedieneinheit in dem digitalen komprimierten Format, wobei das Senden der Vielzahl von Datenpaketen auf mindestens einer Übertragungsfrequenz durch eine vorbestimmte digitale Sendeplattform erfolgt;
- Anordnen einer Vielzahl von Beistellgeräten, die auf die Übertragungsfrequenz eingestellt sind, bei einer Vielzahl von Adressaten, wobei jedes Beistellgerät der Vielzahl von Beistellgeräten von einem vorbestimmten Adressaten der Vielzahl von Adressaten verwendet wird, auf jedem Beistellgerät der Vielzahl von Beistellgeräten ein vorbestimmtes Anwendungsprogramm ausgeführt wird und jedes Beistellgerät dafür angepasst ist, alle Datenpakete der Vielzahl von Datenpaketen in dem vorbestimmten digitalen komprimierten Format zu empfangen;
- Anmelden des Adressaten in dem Anwendungsprogramm des Beistellgeräts, wobei der Schritt des Anmeldens durch Eingeben der Zugangsdaten des Adressaten oder mittels einer Fernbedienung oder mittels einer Chipkarte erfolgt;
- Empfangen der Vielzahl von Datenpaketen in dem digitalen komprimierten Format durch jedes Beistellgerät der Vielzahl von Beistellgeräten;
- selektives Berechnen der durch jedes Beistellgerät in dem digitalen komprimierten Format empfangenen Vielzahl von Datenpaketen durch jedes Anwendungsprogramm, das auf jedem Beistellgerät der Vielzahl von Beistellgeräten ausgeführt wird, wobei der Schritt der Berechnens die folgenden Schritte umfasst:
- Identifizieren eines vorbestimmten Adressaten oder einer vorbestimmten Gruppe von Adressaten, an den bzw. die eine vorbestimmte Postsendung zu liefern ist, wobei der oder jeder Adressat mit einem vorbestimmten Beistellgerät der Vielzahl von Beistellgeräten verbunden ist und in dem entsprechenden Anwendungsprogramm angemeldet ist;
- selektives Bestimmen von Adressatendatenpaketen in der Vielzahl von Datenpaketen, die an den vorbestimmten Adressaten oder die vorbestimmte Gruppe von Adressaten adressiert sind, der bzw. die in dem Schritt des Identifizierens identifiziert worden ist bzw. sind;
- Analysieren des oder jedes bestimmten Datenpakets;
- Erstellen eines Bildes aus den komprimierten Datenpaketen, das für die vorbestimmte ursprüngliche Postsendung repräsentativ ist;
- Anzeigen des Bildes der vorbestimmten Postsendung auf einem Fernsehgerät des vorbestimmten Adressaten, wobei das Fernsehgerät wirksam mit dem vorbestimmten Beistellgerät verbunden ist.

2. Verfahren nach Anspruch 1, wobei die vorbestimmte Gruppe von Adressaten demselben geografischen Gebiet angehört, das auf der Grundlage von Daten in Bezug auf die Wohn-/Aufenthaltsadresse des Adressaten identifiziert wird, die aus der Gruppe bestehend aus: mindestens einer Stadt, mindestens einem Stadtgebiet, mindestens einer Straße ausgewählt sind, wobei in diesem Fall der Schritt des Identifizierens auf der Grundlage der von diesem geografischen Gebiet identifizierten Daten erfolgt, der die Adressaten angehören, die der vorbestimmten Einheit angehören, und Authentifizierungsschlüssel erzeugt werden, die mit der Gruppe von Adressaten verknüpft sind.

3. Verfahren nach Anspruch 1, wobei der Schritt des Sendens der Vielzahl von Datenpaketen unter Verwendung von Karusselltechniken, die eine zyklische Übertragung von Daten umfassen, und/oder Streamingtechniken erfolgt.

4. Verfahren nach Anspruch 1, wobei das vorbestimmte digitale komprimierte Format aus der Gruppe ausgewählt ist, die aus Folgendem besteht:
- einem vektoriellen Metaformat, wodurch die Vielzahl von Datenpaketen eine Vielzahl von vektoriellen grafischen Konstrukten enthält, wobei jedes vektorielle grafische Konstrukt der Vielzahl mindestens eine vektorielle elementare Komponente und eine Vielzahl von Daten/Befehlen zum Bedienen der enthaltenen vektoriellen elementaren Komponenten und der Pakete selbst umfasst, d. h. zu ihrer Definition und Sequenzialisierung, zum Bedienen der Sicherheit der Zugänge, der Sicherheit der Daten und für einen selektiven Zugang, um die ursprünglichen Postsendungen getreu zu rekonstruieren und einen Zugang für einzelne Benutzer/Adressaten sicherzustellen, an die die Postsendungen tatsächlich adressiert sind, wobei das vektorielle Metaformat von den standardisierten "skalierbaren Vektorgrafiken" SVG abgeleitet ist, sodass es an eine serielle Interpretation der Steuerungen angepasst ist, um die Verwendung von Speicher in der Phase des "Parsens" zu minimieren, d. h. in einem Schritt der syntaktischen Analyse, durch die ein kontinuierlicher Strom als Eingangsgröße analysiert wird, und um die Größe im Speicher der vektoriellen Darstellung vollständig zu minimieren.
- einem grafischen Format, basierend auf dem JPEG-Format oder MPEG-Standards oder PNG.

5. Verfahren nach Anspruch 4, wobei der Schritt des Umwandelns die folgenden Vorgänge umfasst:
- Erzeugen vektorieller "Bilder" der ursprünglichen Postsendungen, wobei der Schritt des Erzeugens unter Verwendung von Regeln und Syntax des vektoriellen Metaformats erfolgt;
- Erstellen mindestens eines binären Wörterbuchs, das vektorielle Konstrukte enthält, die unter den verschiedenen vektoriellen Bildern der verschiedenen Postsendungen wiederkehrend sind oder in einem selben vektoriellen Bild derselben Postsendung wiederkehrend sind;
- Erstellen eines vorbestimmten binären Fingerabdrucks, der mit jeder Seite jedes vektoriellen Bildes jeder Postsendung verknüpft ist, wobei jeder binäre Fingerabdruck beide möglichen spezifischen vektoriellen Konstrukte der spezifischen Seite umfasst, d. h. die nicht auf anderen Seiten wiederkehrend sind und dann nicht in den Wörterbüchern enthalten sind, und alle innerhalb des Fingerabdrucks selbst oder auf die Wörterbücher verweisenden Binärbefehle, um das vektorielle Bild der Seite der ursprünglichen Postsendung zu rekonstruieren, auf die sich der binäre Fingerdruck bezieht;
- Erstellen binärer Indexe, d. h. Indizieren der Vielzahl von binären Fingerabdrücken zum Bestimmen von Schlüsselwörtern, darunter auch Absender, Objekt, Adressat, Seite, wobei eine Vielzahl von binären Indizes erhalten wird;
- Verschlüsseln der binären Fingerabdrücke, um einen ausschließlichen und selektiven Zugang für den einzelnen Adressaten oder die Gruppe von Adressaten sicherzustellen, durch einen folgenden Schritt des Entschlüsselns, der auf der Grundlage der Zugangsdaten erfolgt, wie sie von dem Adressaten in dem Anwendungsprogramm eingegeben werden, das auf dem Beistellgerät betrieben wird, das den Schritt des Anmeldens ausführt, um den Schritt des Empfangens der persönlichen Post zu ermöglichen;
- Verschlüsseln der binären Indizes, um einen ausschließlichen und selektiven Zugang für den einzelnen Adressaten oder Gruppen von Adressaten sicherzustellen, durch einen folgenden Schritt des Entschlüsselns, der auf der Grundlage der Zugangsdaten erfolgt, wie sie von dem Adressaten in dem Anwendungsprogramm eingegeben werden, das auf dem Beistellgerät betrieben wird, das den Schritt des Anmeldens ausführt, um den Schritt des Empfangens der persönlichen Post zu ermöglichen;
- Komprimieren der binären Wörterbücher;
- Komprimieren der verschlüsselten binären Fingerabdrücke;
- Komprimieren der verschlüsselten binären Indizes;
- Verschlüsseln der komprimierten Wörterbücher auf der Grundlage von generischen, d. h. nicht für die verschiedenen Adressaten spezifischen, Algorithmen/Schlüsseln, da von der Betriebssoftware auf dem Beistellgerät verschiedener Adressaten zur Rekonstruktion der verschiedenen Postsendungen, die die Wörterbücher verwenden, Zugang zu ihnen möglich sein muss;
- Erstellen einer Vielzahl von Datenpaketen, die durch lexikalische Segmentierung erhalten werden, d. h. auf der Grundlage der besonderen Regeln der interaktiven digitalen Sendetechnik, die zum Erzeugen der Karussells oder der Ströme verwendet wird oder in jedem Fall zum Vorbereiten der digitalen Sendeübertragung und zum Ermöglichen des Schritts des Empfangens durch das auf dem Markt verfügbare Beistellgerät.

6. Verfahren nach Anspruch 5, wobei der Schritt des Definierens und Analysierens des oder jedes Datenpakets, das beim Senden durch die Betriebssoftware auf dem Beistellgerät empfangen wird, einen Schritt des "Abgleichens" umfasst, um nur Datenpakete zu definieren, die an den Adressaten adressiert sind, der aktuell mittels Zugangsdaten oder Chipkarte in dem Anwendungsprogramm angemeldet ist, das auf dem Beistellgerät betrieben wird, und ein folgendes Entschlüsseln und Dekomprimieren für den Zugang zu den binären Indizes, zu den binären Fingerabdrücken und zu den binären Wörterbüchern, die für die Rekonstruktion der vektoriellen Bilder der an den angemeldeten Adressaten adressierten Postsendungen erforderlich sind.

7. Verfahren nach Anspruch 1, wobei der Schritt der Sendeübertragung durch eine Übertragung von mindestens eines der Folgenden ausgeführt wird:
- einer Vielzahl von binären Wörterbüchern;
- einer Vielzahl von binären Fingerabdrücken;
- einer Vielzahl von binären Indizes;
- einer Vielzahl von binären Dienstobjekten, die aus der Vielzahl von Dienstdatenpaketen erhalten wird;
- einer Vielzahl von grafischen oder multimedialen Objekten in einem Format auf der Grundlage des JPEG-Formats oder PNG oder MPEG-Standards;
oder einer Kombination derselben.

8. Verfahren nach Anspruch 1, wobei ein Schritt des Verschlüsselns ferner für die Produktion der Datenpakete in einem digitalen komprimierten und verschlüsselten Formats bereitgestellt wird, das aus der Gruppe bestehend aus Folgendem ausgewählt ist:
- einer Verschlüsselung symmetrischer Art;
- einer Verschlüsselung asymmetrischer Art.

9. Verfahren nach Anspruch 8, wobei vor dem Schritt des Sendens ein Schritt des Segmentierens der Vielzahl von binären Wörterbüchern, der Vielzahl von binären Fingerabdrücken, der Vielzahl von binären Indizes, der Vielzahl von binären Dienstobjekten, der Vielzahl von Dateien auf der Grundlage von JPEG, PNG oder MPEG-Standards bereitgestellt wird, wobei das Segmentieren daran angepasst ist, die Größe der Datenpakete der binären Wörterbücher, der binären Fingerabdrücke, der binären Indizes, der binären Dienstobjekte und der Dateien auf der Grundlage von JPEG, PNG oder MPEG-Standards, die eine Größe aufweisen, die größer als eine vorbestimmte Größenbeschränkung ist, zu einer Vielzahl von Datenpaketen zu reduzieren, die eine Größe aufweist, die geringer als eine vorbestimmte Größenbeschränkung ist.

10. Verfahren nach Anspruch 9, wobei nach dem Schritt des Segmentierens ein Schritt des Eingebens der Vielzahl von segmentierten, d. h. aus dem Schritt des Segmentierens erhaltenen, Datenpaketen in eines oder mehrere Karussells und/oder in spezifische Ströme gemäß einer Optimierungslogik des Bandes und der Empfangsleistung bereitgestellt wird.

11. Verfahren nach Anspruch 1, wobei die Sendeübertragung aus der Gruppe ausgewählt ist, die aus Folgendem besteht:
- digitaler Satellitenfernsehsendung;
- digitaler Kabelfernsehsendung;
- digitaler terrestrischer Fernsehsendung;
- digitaler Fernsehsendung für tragbare mobile Endgeräte;
- digitaler Sendung von VHF/UHF
- digitaler Sendung über WIMAX;
- oder einer Kombination derselben.

12. Verfahren nach Anspruch 1, wobei der Schritt des Identifizierens des Adressaten die folgenden Schritte umfasst:
- Eingeben von Adressatendaten, ausgewählt aus der Gruppe umfassend: Benutzername, numerischen PIN-Code, Passwort, Postadresse (Ort, Straße, Hausnummer) durch den Adressaten;
- Anwenden eines vorbestimmten Algorithmus auf die Daten durch das auf dem Beistellgerät ausgeführte Anwendungsprogramm, wobei ein Zugangsschlüssel erzeugt wird, der dafür angepasst ist, einen einzelnen Adressaten oder eine Gruppe von Adressaten zu bestimmen;
- Verwenden des Zugangsschlüssels durch das Anwendungsprogramm für die direkte Definition der Datenpakete, die für den Adressaten von Interesse sind, durch Überprüfen der Kompatibilität mit den Zugangsidentifizierungscodes der Datenpakete der Sendungen;

13. Verfahren nach Anspruch 1, wobei der Schritt des Identifizierens des Adressaten die folgenden Schritte umfasst:
- Einführen einer Chipkarte, die vorbestimmte Daten in Bezug auf den Adressaten enthält, in einen Chipkartenleser, wobei der Chipkartenleser wirksam mit dem Beistellgerät verbunden ist;
- Eingeben einer mit der Chipkarte verknüpften PIN;
- Anwenden eines vorbestimmten Algorithmus auf die Daten durch das auf dem Beistellgerät ausgeführte Anwendungsprogramm, wobei ein Zugangsschlüssel erzeugt wird;
- Verwenden des Zugangsschlüssels durch das Anwendungsprogramm für die direkte Definition der Datenpakete, die für den Adressaten von Interesse sind, durch Überprüfen der Kompatibilität mit den Zugangsidentifizierungscodes, die mit den Datenpaketen in Bezug auf die Sendungen verknüpft sind.

14. Verfahren nach Anspruch 1, wobei der Schritt des Identifizierens interaktiv von der zentralen Bedieneinheit aus ausgeführt wird und einen Rückkanal des Beistellgeräts bereitstellt, wobei der Rückkanal dafür angepasst ist, das Beistellgerät über ein Telefonnetzwerk, ein xDSL-Netzwerk oder ein drahtloses Netzwerk mit der zentralen Bedieneinheit zu verbinden, wobei der Schritt des Identifizierens in diesem Fall die folgenden Schritte umfasst:
- Eingeben eines Benutzernamens und eines Passworts durch den Adressaten;
- Übermitteln des Benutzernamens und des Passworts an die zentrale Bedieneinheit, wobei der Schritt des Übermittelns durch den Rückkanal auf einem sicheren und authentifizierten Protokoll erfolgt;
- Überprüfen der Übereinstimmung des Benutzernamens und des Passworts mit einem registrierten Adressaten;
- Übertragen des Zugangsschlüssels des Adressaten durch die zentrale Einheit an das auf dem Beistellgerät ausgeführte Anwendungsprogramm durch den Rückkanal des Beistellgeräts, wobei die Übertragung nur im Fall eines positiven Ergebnisses der Schritts des Überprüfens erfolgt;
- Verwenden des Zugangsschlüssels durch das Anwendungsprogramm für die direkte Definition der Datenpakete, die für den Adressaten von Interesse sind, durch Überprüfen der Kompatibilität mit den Zugangsidentifizierungscodes der Sendungen.

15. Verfahren nach Anspruch 1, wobei weiterhin ein Schritt des Interagierens des Adressaten mit dem auf dem Beistellgerät ausgeführten Anwendungsprogramm bereitgestellt wird, wobei während des Schritts des Interagierens mindestens einer der folgenden Vorgänge ausgeführt wird:
- Identifizieren des Adressaten (Anmeldung);
- Anzeigen der Liste der bereits übertragenen oder in der Übertragung befindlichen, gelesenen oder zu lesenden Postsendungen, die an den Adressaten adressiert sind;
- Anzeigen einer in der Übertragung befindlichen Postsendung (auf Sendung);
- Anzeigen und Ausfüllen von Fragebögen, d. h. für das Sammeln von Daten für Marktanalysen, Befragungen, Umfragen angepassten Postsendungen, die es dem Adressaten ermöglichen, sobald sie erhalten und angezeigt sind, unter Verwendung der Fernbedienung des Beistellgeräts eine Antwort auf bestimmte Fragen in der Postsendung zu geben;
- Übertragen der von dem Adressaten gegebenen Antwort auf Fragebögen an die zentrale Bedieneinheit durch eine synchrone oder asynchrone Verbindung auf dem Rückkanal, wobei die Antwort insbesondere personalisiert, d. h. mit dem Adressaten, der die Antwort gegeben hat, verknüpft, oder anonym sein kann und die Antwort statistisch aggregiert wird;
- interaktive Recherchen zu den im Speicher des Beistellgeräts vorhandenen Postsendungen;
- Anfordern der Anzeige einer vorbestimmten im Speicher des Beistellgeräts vorhandenen Postsendung;
- Übermitteln einer spezifischen Anforderung an die zentrale Bedieneinheit für die Übertragung einer vorbestimmten Postsendung, die nicht im Speicher des Beistellgeräts vorhanden, aber in der Liste der übertragenen und empfangenen Sendungen, die die bereits übertragenen, aber nicht die momentan in der Übertragung befindlichen Dokumente enthält, vorhanden ist;
- Übermitteln einer generischen Anforderung an die zentrale Bedieneinheit für die Übertragung der noch nicht übertragenen Postsendungen;
- Löschen einer vorbestimmten Postsendung aus dem Speicher des Beistellgeräts;
- Übermitteln anderer Dienstanforderungen an die zentrale Bedieneinheit, wie etwa Anforderungen für die Archivierung in der zentralen Bedieneinheit oder Archivierung durch optische Substitution;
- interaktive Recherchen zu den in den zentralen historischen Archiven des Systems vorhandenen Postsendungen durch synchrone bidirektionale Interaktion auf dem Rückkanal mit der zentralen Bedieneinheit;
- Zugang zu in den zentralen historischen Archiven des Systems vorhandenen Postsendungen und Empfangen der Postsendung entweder aus Sendeübertragung oder direkt mittels des Rückkanals, der eine Punkt-zu-Punkt-Verbindung zu der zentralen Bedieneinheit aufweist.

## Revendications

1. Procédé de livraison d'un produit postal à un destinataire prédéfini **caractérisé en ce qu'**il comprend les étapes suivantes :
- recueil dans une base de données, agencée dans une unité centrale d'exploitation, d'une pluralité d'articles postaux originaux rédigés par au moins un expéditeur, chaque article postal de ladite pluralité étant associé à un code d'identification d'article postal ;
- conversion par l'unité centrale d'exploitation de ladite pluralité d'articles postaux originaux en une pluralité de paquets de données dans un format compressé numérique prédéterminé ;
- diffusion par ladite unité centrale d'exploitation de ladite pluralité de paquets de données dans ledit format numérique compressé, ladite diffusion de ladite pluralité des paquets de données survenant sur au moins une fréquence d'émission par le biais d'une plate-forme de diffusion numérique prédéterminée ;
- installation chez une pluralité de destinataires d'une pluralité de boîtiers décodeurs syntonisés à ladite fréquence d'émission, chaque boîtier décodeur de ladite pluralité de boîtiers décodeurs utilisés par un destinataire prédéterminé de ladite pluralité de destinataires, chaque boîtier décodeur de ladite pluralité de boîtiers décodeurs exécutant un programme d'application prédéterminé, chaque boîtier décodeur étant prévu pour recevoir tous les paquets de données de ladite pluralité de paquets de données dans ledit format compressé numérique prédéterminé ;
- connexion dudit destinataire audit programme d'application dudit boîtier décodeur, ladite étape de connexion étape consistant à saisir les identifiants d'accès du destinataire ou par le biais d'une télécommande ou d'une carte à puce ;
- réception de ladite pluralité de paquets de données dans ledit format numérique compressé par chaque boîtier décodeur de ladite pluralité de boîtiers décodeurs ;
- calcul sélectif, par chaque programme d'application qui s'exécute sur chaque boîtier décodeur de ladite pluralité de boîtiers décodeurs, de ladite pluralité de paquets de données reçue par chaque boîtier décodeur dans ledit format numérique compressé, ladite phase de calcul comprenant les étapes suivantes :
- identification d'un destinataire prédéterminé, ou d'un groupe prédéterminé de destinataires, auquel un article postal prédéterminé doit être livré, ledit, ou chaque, destinataire étant relié à un boîtier décodeur prédéterminé de ladite pluralité de boîtiers décodeurs et étant connecté au programme d'application correspondant ;
- détermination sélective, parmi ladite pluralité de paquets de données, des paquets de données pour destinataire qui sont adressées audit destinataire prédéterminé, ou audit groupe prédéterminé de destinataires, identifié dans ladite étape d'identification ;
- analyse dudit, ou de chaque, paquet de données déterminé ;
- création à partir desdits paquets de données compressés une image représentative dudit article postal original prédéterminé ;
- affichage de ladite image dudit article postal prédéterminé sur un téléviseur dudit destinataire prédéterminé, ledit téléviseur étant relié de manière opérationnelle audit boîtier décodeur prédéterminé.

2. Procédé selon la revendication 1, où ledit groupe prédéterminé de destinataires appartient à un même secteur géographique identifié sur la base de données par rapport au domicile/l'adresse de résidence dudit destinataire sélectionné parmi le groupe comprenant : au moins une ville, au moins une zone de la ville, au moins une route, dans ce cas, ladite étape d'identification s'effectuant sur la base desdites données identifiées de ladite zone géographique desdits destinataires appartenant à ladite unité prédéterminée et générant lesdites clés d'authentification associées audit groupe de destinataires.

3. Procédé selon la revendication 1, où ladite étape de diffusion de ladite pluralité de paquets de données s'effectue à l'aide de techniques de carrousel comprenant une transmission cyclique de données et/ou techniques de streaming (flux continu).

4. Procédé selon la revendication 1, où ledit format compressé numérique prédéterminé est choisi parmi le groupe comprenant :
- un méta-format vectoriel grâce auquel ladite pluralité de paquets de données contient une pluralité de constructions graphiques vectorielles, chaque construction graphique vectorielle de ladite pluralité comprenant au moins une composante élémentaire vectorielle et une pluralité de données/instructions pour le fonctionnement des composantes élémentaires vectorielles et des paquets, à savoir pour leur définition et séquentialisation, pour gérer la sécurité des accès et la sécurité des données, et pour un accès sélectif afin de reconstituer fidèlement les articles postaux originaux et assurer un accès aux utilisateurs/destinataires individuels auxquels lesdits articles postaux sont effectivement adresses, ledit méta-format vectoriel étant dérivé de la norme SVG 'Scalable Vector Graphics' (acronyme américain pour graphique vectoriel adaptable), de sorte qu'il permet à une interprétation en série des contrôles pour minimiser l'utilisation de la mémoire dans la phase 'd'analyse syntaxique', soit une étape d'analyse syntaxique permettant l'analyse d'un flux continu à l'entrée et de minimiser complètement la taille en mémoire de la représentation vectorielle,
- un format graphique fondé sur le format JPEG ou les normes MPEG, ou PNG.

5. Procédé selon la revendication 4, où ladite étape de conversion comprend les opérations suivantes :
- génération 'd'images' vectorielles desdits articles postaux originaux, ladite étape de génération étant réalisée à l'aide des règles et de la syntaxe dudit méta-format vectoriel ;
- création d'au moins un dictionnaire binaire contenant des constructions vectorielles qui sont récurrentes parmi les différentes images vectorielles des différents articles postaux ou récurrents dans une même image vectorielle du même article postal ;
- création d'une empreinte binaire prédéterminée associée à chaque page de chaque image vectorielle de chaque article postal, chaque empreinte binaire comprenant les deux constructions vectorielles spécifiques possibles de cette page spécifique, soit non récurrentes dans d'autres pages, et également non incluses dans les dictionnaires, et toutes les instructions binaires de pointage dans l'empreinte ou bien les dictionnaires, afin de reconstruire l'image vectorielle de la page de l'article postal original auquel se rapporte l'empreinte binaire ;
- création d'indices binaires, c'est-à-dire l'indexation de ladite pluralité d'empreintes binaires pour déterminer les mots clés, parmi lesquels également l'expéditeur, l'objet, le destinataire, la page, l'obtention d'une pluralité d'index binaires ;
- cryptage desdites empreintes binaires pour assurer un accès exclusif et sélectif pour le destinataire individuel, ou groupe de destinataires, par une étape de cryptage suivante sur la base des identifiants d'accès tels que saisis par le destinataire dans le programme d'application fonctionnant sur le boîtier décodeur qui réalise l'étape de connexion pour activer l'étape de réception du courrier personnel ;
- cryptage desdites indices binaires pour assurer un accès exclusif et sélectif pour le destinataire individuel, ou groupe de destinataires, par une étape de décryptage suivante sur la base des identifiants d'accès tels que saisis par le destinataire dans le programme d'application fonctionnant sur le boîtier décodeur qui réalise l'étape de connexion pour activer l'étape de réception du courrier personnel ;
- compression desdits dictionnaires binaires ;
- compression desdites empreintes binaires cryptées ;
- compression desdites indices binaires cryptés ;
- cryptage des dictionnaires compressés sur la base d'algorithmes/de clés génériques, c'est-à-dire non spécifiques aux différents destinataires, puisqu'ils doivent être accessibles par le logiciel d'exploitation sur le boîtier décodeur des différents destinataires pour la reconstruction des différents articles postaux qui utilisent les dictionnaires ;
- création d'une pluralité de paquets de données, obtenus par segmentation lexicale, c'est-à-dire sur la base des règles particulières de la technique de diffusion numérique interactive utilisée pour générer les carrousels ou les flux, ou en tout cas pour la préparation à la transmission par diffusion numérique et pour activer l'étape de réception par le boîtier décodeur disponible sur le marché.

6. Procédé selon la revendication 5, où ladite étape de définition et d'analyse dudit, ou de chaque paquet reçu lors de la diffusion par ledit logiciel d'exploitation sur le boîtier décodeur comprend une étape de 'mise en correspondance' pour définir uniquement les paquets de données qui sont adressées au destinataire actuellement connecté au moyen d'informations d'identification ou d'une carte à puce, au programme d'application fonctionnant sur le boîtier décodeur et après décryptage et décompression pour accéder aux indices binaires, aux empreinte binaire et aux dictionnaires binaires nécessaire à la reconstruction des images vectorielles des articles postaux qui sont adressés au destinataire connecté.

7. Procédé selon la revendication 1, où ladite étape de transmission de diffusion est effectuée par le biais d'une transmission d'au moins un élément parmi :
- une pluralité de dictionnaires binaires ;
- une pluralité d'empreintes binaires ;
- une pluralité d'indices binaires ;
- une pluralité d'objets binaires de service obtenus à partir de ladite pluralité de paquets de données de service ;
- une pluralité d'objets graphiques ou multimédia, dans un format fondé sur le format JPEG ou PNG, ou les normes MPEG ;
ou une combinaison de ceux-ci.

8. Procédé selon la revendication 1, où une étape de cryptage est également prévue pour permettre la production desdits paquets de données dans un format compressé et crypté numérique qui est choisi dans le groupe comprenant :
- un cryptage de type symétrique ;
- un cryptage de type asymétrique.

9. Procédé selon la revendication 8, où ladite étape de diffusion est précédée par une étape de segmentation de ladite pluralité de dictionnaires binaires, de ladite pluralité d'empreintes binaires, de ladite pluralité d'indices binaires, de ladite pluralité d'objets binaires de service, de ladite pluralité de fichiers fondés sur les normes JPEG, PNG ou MPEG, ladite segmentation permettant de réduire la taille des paquets de données desdits dictionnaires binaires, desdites empreintes binaires, desdits indices binaires, desdits objets binaires de service et desdits fichiers fondés sur les normes JPEG, PNG ou MPEG, dont la taille est supérieure à une limite de taille prédéterminée dans une pluralité de paquets de données de taille inférieure à ladite limite de taille prédéterminée.

10. Procédé selon la revendication 9, où ladite étape de segmentation est suivie d'une étape de saisie de ladite pluralité de paquets de données segmentés, c'est-à-dire obtenus à partir de ladite étape de segmentation, dans un ou plusieurs carrousels et/ou dans certains flux selon une logique d'optimisation de la bande et des performances de réception.

11. Procédé, selon la revendication 1, où ladite transmission de diffusion est choisie dans le groupe comprenant :
- une diffusée télévisée par satellite numérique ;
- une diffusée télévisée par câble numérique ;
- une diffusée télévisée terrestre numérique ;
- une diffusion télévisée numérique pour les périphériques mobiles portables ;
- une diffusion numérique sur VHF/UHF ;
- une diffusion numérique sur WIMAX ;
- ou une combinaison de celles-ci.

12. Procédé selon la revendication 1, où ladite étape d'identification dudit destinataire comprend les étapes suivantes :
- saisie des données destinataire choisies dans le groupe composé de : nom d'utilisateur, code numérique PIN, mot de passe, adresse postale (lieu, rue, numéro de rue) par le destinataire ;
- application d'un algorithme prédéterminé auxdites données par ledit programme d'application qui est exécuté dans ledit boîtier décodeur en générant une clé d'accès permettant de déterminer un destinataire individuel ou un groupe de destinataires ;
- utilisation de ladite clé d'accès par ledit programme d'application pour une définition directe des paquets de données d'intérêt pour le destinataire en vérifiant la compatibilité avec les codes d'identification d'accès de paquets de données desdits articles.

13. Procédé selon la revendication 1, où ladite étape d'identification dudit destinataire comprend les étapes suivantes :
- insertion d'une carte à puce contenant des données prédéterminées concernant le destinataire dans un lecteur de carte à puce, ledit lecteur de carte à puce étant relié de manière opérationnelle audit boîtier décodeur ;
- saisie d'un code PIN associé à ladite carte à puce ;
- application d'un algorithme prédéterminé auxdites données par ledit programme d'application qui est exécuté dans ledit boîtier décodeur en générant une clé d'accès ;
- utilisation de ladite clé d'accès par ledit programme d'application pour une définition directe des paquets de données d'intérêt pour le destinataire en vérifiant la compatibilité avec les codes d'identification d'accès associés aux paquets de données concernant lesdits articles.

14. Procédé selon la revendication 1, où ladite étape d'identification est réalisée de façon interactive à partir de ladite unité centrale d'exploitation et constitue un canal de retour dudit boîtier décodeur, ledit canal de retour permettant de relier ledit boîtier décodeur à ladite unité centrale d'exploitation par un réseau téléphonique, un réseau xDSL ou un réseau sans fil, ladite étape d'identification comprenant dans ce cas les étapes suivantes :
- saisie par le destinataire d'un nom d'utilisateur et d'un mot de passe ;
- envoi dudit nom d'utilisateur et dudit mot de passe à ladite unité centrale d'exploitation, ladite étape d'envoi faisant appel au canal de retour sur un protocole authentifié et sécurisé ;
- contrôle de correspondance dudit nom d'utilisateur et dudit mot de passe pour un destinataire enregistré ;
- transmission par l'unité centrale au programme d'application qui est exécuté sur le boîtier décodeur à travers ledit canal de retour du boîtier décodeur de la clé d'accès du destinataire, ladite transmission ne survenant qu'en cas de résultat positif de ladite étape de contrôle ;
- utilisation de ladite clé d'accès par ledit programme d'application pour une définition directe des paquets de données d'intérêt pour le destinataire en vérifiant la compatibilité avec les codes d'identification d'accès desdits articles.

15. Procédé selon la revendication 1, où, en outre, une étape d'interaction est prévue pour ledit destinataire avec ledit programme d'application qui est exécuté sur ledit boîtier décodeur, au cours de ladite étape d'interaction au moins l'une des opérations suivantes est effectuée :
- identification du destinataire (connexion) ;
- affichage de la liste des articles postaux déjà transmis ou en cours de transmission, déjà lu ou à lire, qui sont adressées au destinataire ;
- affichage d'un article postal en cours de transmission (dans l'espace) ;
- affichage et remplissage de questionnaires, c'est-à-dire articles postaux permettant la collecte des données pour une analyse de marché, enquête, sondages, qui, une fois reçus et affichés, fournissent la possibilité pour le destinataire, de donner une réponse à des questions particulières dans l'article postal à l'aide de la télécommande du boîtier décodeur ;
- transmission de la réponse aux questionnaires fournis par le destinataire à l'unité centrale d'exploitation par le biais d'une liaison synchrone ou asynchrone sur le canal de retour, en particulier la réponse peut être personnelle, c'est-à-dire associée au destinataire qui a fourni la réponse, ou anonyme, agrégeant statistiquement la réponse ;
- recherches interactives sur les articles postaux présents dans la mémoire du boîtier décodeur ;
- demande d'affichage d'un article postal prédéterminé présent dans la mémoire du boîtier décodeur ;
- envoi d'une demande spécifique pour transmission à l'unité centrale d'exploitation d'un article postal prédéterminé non présent dans la mémoire du boîtier décodeur mais présent dans la liste de transmission et de réception, contenant les documents déjà transmis mais par actuellement en cours de transmission ;
- envoi de demande générique de transmission à l'unité centrale d'exploitation des articles postaux non encore transmis ;
- effacement d'un article postal prédéterminé de la mémoire du boîtier décodeur ;
- envoi d'autres demandes de service à l'unité centrale d'exploitation, comme des demandes d'archivage sur l'unité centrale d'exploitation, ou archivage de substitution optique ;
- recherches interactives sur les articles postaux présents dans les archives historiques du système par le biais d'une interaction bidirectionnelle synchrone sur le canal de retour avec l'unité centrale d'exploitation ;
- accès aux articles postaux présents sur les archives historiques centrales du système, et réception de l'article postal soit depuis la transmission par diffusion soit directement par le biais du canal de retour relié point-à-point à l'unité centrale d'exploitation.
